# EUROPEAN PATENT APPLICATION

(11) **EP 3 988 506 A1**
(43) Date of publication of application: **27.04.2022**
(21) Application number: 20202990.6
(22) Date of filing: 21.10.2020
(51) Int. Cl.: C01B 39/48, C01B 39/20, C01B 39/26, C01B 39/30, C01B 39/36, C01B 39/44, C01B 39/46

(54) **ZEOLITE SYNTHESIS FROM CYCLIC PRECURSORS**

(71) Applicant: BASF SE, 67056 Ludwigshafen am Rhein (DE)
(72) Inventor: SCHREYER, Hannah, 5082 Kaisten (CH); FRISCHHUT, Sabine, 67056 Ludwigshafen am Rhein (DE); SCHWEINFURTH, David Dominique, 67056 Ludwigshafen am Rhein (DE); WEIGUNY, Sabine, 67056 Ludwigshafen am Rhein (DE); MUELLER, Imke Britta, 67056 Ludwigshafen am Rhein (DE); MUELLER, Ulrich, 67435 Neustadt (DE)
(74) Representative: Altmann Stößel Dick Patentanwälte PartG mbB

(57) **Abstract**

The present invention relates to a process for the preparation of a zeolitic material comprising SiO₂ and X₂O₃ in its framework structure, wherein Y stands for a tetravalent element and X stands for a trivalent element, wherein said process comprises:
(i) preparing a mixture comprising one or more sources of SiO₂, one or more sources of X₂O₃, and H₂O, wherein the one or more sources of SiO₂ comprises one or more cyclic compounds according to formula (I):

[-(MR'R")-O]n (I)

wherein M stands for one or more elements selected from the group consisting of Si, Al, and Ti, including combinations of two or three thereof,
wherein n is an integer comprised in the range of from 3 to 12, and
wherein independently from one another, R' and R" stand for H, OMc, alkyl, alkoxy, or siloxy,
wherein Mc stands for a cationic moiety; and

(ii) grinding and/or mixing the mixture prepared in (i);
(iii) heating the mixture obtained in (ii) for crystallizing a zeolitic material comprising SiO₂ and X₂O₃ in its framework structure from the mixture. Furthermore, the present invention relates to a zeolitic material comprising SiO₂ and X₂O₃ in its framework structure obtainable and/or obtained according to the inventive process, wherein X stands for a trivalent element, as well as to the use of the zeolitic material obtainable and/or obtained according to the inventive process.

## Description

### TECHNICAL FIELD

The present invention relates to a process for the preparation of a zeolitic material comprising SiO₂ and X₂O₃ in its framework structure from a mixture containing a source for SiO₂ comprising one or more cyclic compounds of the formula [-(MR'R")-O]ₙ, wherein M stands for one or more elements selected from the group consisting of Si, Al, and Ti, including combinations of two or three thereof. The present invention further relates to a zeolitic material per se as obtainable or obtained according to said process and to the use of the inventive zeolitic material, in particular as a catalyst.

### INTRODUCTION

Molecular sieves are classified by the Structure Commission of the International Zeolite Association according to the rules of the IUPAC Commission on Zeolite Nomenclature. According to this classification, framework-type zeolites and other crystalline microporous molecular sieves, for which a structure has been established, are assigned a three letter code.

Among said zeolitic materials, chabazite is a well-studied example, wherein it is the classical representative of the class of zeolitic materials having a CHA framework structure. Besides aluminosilicates such as chabazite, the class of zeolitic materials having a CHA framework structure comprises a large number of compounds further comprising phosphorous in the framework structure are known which are accordingly referred to as silicoaluminophosphates (SAPO). In addition to said compounds, further molecular sieves of the CHA structure type are known which contain aluminum and phosphorous in their framework, yet contain little or no silica, and are accordingly referred to as aluminophosphates (APO). Zeolitic materials belonging to the class of molecular sieves having the CHA-type framework structure are employed in a variety of applications, and in particular serve as heterogeneous catalysts in a wide range of reactions such as in methanol to olefin catalysis and selective catalytic reduction of nitrogen oxides NOₓ to name two of the most important applications. Zeolitic materials of the CHA framework type are characterized by three-dimensional 8-membered-ring (8MR) pore/channel systems containing double-six-rings (D6R) and cages.

Zeolitic materials having a CHA-type framework structure and in particular chabazite with incorporated copper ions (Cu-CHA) are widely used as heterogeneous catalyst for the selective catalytic reduction (SCR) of NOₓ fractions in automotive emissions. Based on the small pore openings and the alignment of the copper ions in the CHA cages, these catalyst systems have a unique thermal stability, which tolerates temperatures higher than 700°C in presence of H₂O.

Among zeolitic materials having the CHA-type framework structure, high silica aluminosilicate zeolite chabazite (CHA), SSZ-13, has a three-dimensional pore system with ellipsoidal-shaped large cages (6.7 x 10 Å) that are accessible via 8-membered ring windows (3.8 x 3.8 Å), which have attracted great interest because they exhibit extraordinary catalytic properties not only in selective catalytic reduction of NOₓ with NH₃ (NH₃-SCR) in recent years, but also in methanol to olefin (MTO) and in the conversion of syngas to olefins.

The synthesis of zeolitic materials from simple starting compounds involves a complex process of self-organization, wherein the framework structure is usually assembled from simple precursors such as fumed silica, silica gel, and silicates, as well as corresponding sources of trivalent elements such as alumina, but also from existing zeolitic frameworks which are transformed into another zeolite structure via interzeolitic conversion. In most cases, the zeolite synthesis involves the use of a templating agent in the form of an organotemplate and/or of seed crystals. Nevertheless, the nature of the precursor material for silica and eventually trivalent element oxides forming the framework structure is essential for allowing the formation of the building blocks which self-organize to the complex three-dimensional structure.

Marler, B. and Gies, H. in Eur. J. Mineral. 2012, 24, 405-428 discuss new synthetic routes for zeolites departing from hydrous layer silicates as precursors. Yang, B. et al. in Angew. Chem. Int. Ed. 2018, 57, 915-9519, on the other hand, relates to the synthesis of zeolites with particularly large pores from interlayer expansion of a two-dimensional silicate structure with the aid of a single 4-ring silane as silylation agent.

There however remains the problem of providing a process for the synthesis of zeolitic materials which does not depend on an existing layered structure which highly limits the range of products which may be obtained. In particular, there remains the problem of providing a process for the synthesis of zeolitic materials using new precursor materials which are highly versatile with regard to the range of products which may be obtained.

### DETAILED DESCRIPTION

It was therefore the object of the present invention to provide an improved process for the preparation of zeolitic materials which employ new precursor materials allowing for an improved synthesis, both with regard to the efficiency of the process and the yield and purity of the materials obtained, as well as for allowing the synthesis of new zeolitic materials with unprecedented physical and chemical properties. Thus, it has surprisingly been found that zeolitic materials in high purity may be obtained from simple precursor materials already displaying basic structural elements and in particular elementary ring structures present in the final zeolitic material.

Therefore, the present invention relates to
the present invention relates to a process for the preparation of a zeolitic material comprising SiO₂ and X₂O₃ in its framework structure, wherein Y stands for a tetravalent element and X stands for a trivalent element, wherein said process comprises:
(i) preparing a mixture comprising one or more sources of SiO₂, one or more sources of X₂O₃, and H₂O, wherein the one or more sources of SiO₂ comprises one or more cyclic compounds according to formula (I):

   [-(MR'R")-O]ₙ (I)

   wherein M stands for one or more elements selected from the group consisting of Si, Al, and Ti, including combinations of two or three thereof,
   wherein n is an integer comprised in the range of from 3 to 12, and
   wherein independently from one another, R' and R" stand for H, OMc, alkyl, alkoxy, or siloxy,
   wherein Mc stands for a cationic moiety, preferably with a single positive charge; and
(ii) grinding and/or mixing the mixture prepared in (i);
(iii) heating the mixture obtained in (ii) for crystallizing a zeolitic material comprising SiO₂ and X₂O₃ in its framework structure from the mixture.

According to the present invention, it is preferred that M stands for Al and/or Si, wherein more preferably M is Si and wherein in (i) the one or more cyclic compounds according to (I) which are contained in the one or more sources of SiO₂ are one or more cyclic oligosiloxane compounds.

According to the present invention, it is preferred that n is an integer comprised in the range of from 3 to 10, more preferably in the range of from 3 to 8, wherein more preferably n is 3, 4, 5, or 6, more preferably 3, 4, or 6, more preferably 3 or 4, and more preferably 4.

According to the present invention, R' and R" may, independently from one another, stand for OMc, wherein Mc stands for a cationic moiety, preferably with a single positive charge. According to the present invention it is preferred that Mc stands for one or more cationic moieties having a single and/or a double positive charge, more preferably for one or more cationic moieties having a single positive charge. According to the present invention, it is further preferred that Mc stands for one or more cationic moieties selected from the group consisting of alkali metal cations, alkaline earth metal cations, and ammonium, more preferably from the group consisting of alkali metal cations and ammonium, more preferably from the group consisting of Li⁺, Na⁺, K⁺, and ammonium, more preferably from the group consisting of Na⁺, K⁺, and ammonium, wherein more preferably Mc stands for Na⁺ and/or ammonium.

According to the present invention, R' and R" may, independently from one another, stand for alkyl, wherein it is preferred according to the present invention that alkyl stands for C1-C6 alkyl, more preferably for C1-C5 alkyl, more preferably for C1-C4 alkyl, more preferably for C1-C3 alkyl, more preferably for C1-C2 alkyl, wherein more preferably alkyl stands for ethyl or methyl, preferably for methyl.

According to the present invention, R' and R" may, independently from one another, stand for alkoxy, wherein it is preferred that alkoxy stands for -OR, wherein R stands for a C1-C6 alkyl group, more preferably for a C1-C5 alkyl group, more preferably for a C1-C4 alkyl group, more preferably for a C1-C3 alkyl group, more preferably for a C1-C2 alkyl group, wherein more preferably R stands for ethyl or methyl, preferably from methyl.

According to the present invention, R' and R" may, independently from one another, stand for siloxy, wherein it is preferred that siloxy stands for -OSiR¹R²R³, wherein independently from one another, R¹, R², and R³ is H or an alkyl group, preferably H or a C1-C6 alkyl group, more preferably H or a C1-C5 alkyl group, more preferably H or a C1-C4 alkyl group, more preferably H or a C1-C3 alkyl group, more preferably H or a C1-C2 alkyl group, wherein more preferably and independently from one another, R¹, R², and R³ stand for H, ethyl, or methyl, wherein more preferably R¹, R², and R³ stand for ethyl or methyl, preferably from methyl.

According to particular and preferred embodiments of the present invention wherein R' and R" may, independently from one another, stand for alkyl, alkoxy, and/or siloxy, the alkyl group or alkyl groups contained therein may be substituted with one or more functional groups, wherein preferably the one or more functional groups are selected from the group consisting of hydroxyl, halides, amines, and combinations of two or more thereof, more preferably from the group consisting of-OH, -F, -Cl, -Br, -NH₂, and combinations of two or more thereof, and more preferably from the group consisting of-OH, -F, -Cl, -NH₂, and combinations of two or more thereof. According to the present invention, it is preferred that, independently from one another, R' and R" stand for H or siloxy, wherein preferably both R' and R" stand for siloxy.

According to the present invention, it is particularly preferred that the one or more cyclic compounds according to formula (I) comprise octakis(trimethylsiloxy)cyclotetrasiloxane, wherein preferably the cyclic compound is octakis(trimethylsiloxy)cyclotetrasiloxane.

Alternatively, it is preferred according to the present invention that, independently from one another, R' and R" stand for H or alkyl, wherein preferably R' stands for H and R" stands for alkyl, and wherein more preferably R' stands for H and R" stands for methyl.

According to the present invention, it is particularly preferred that independently from one another, R' and R" stand for alkyl, wherein preferably R' and R" stand for methyl.

According to the present invention, it is preferred that the mixture prepared in (i) and ground in (ii), more preferably the mixture prepared in (i) and heated in (iii), contains from 5 to 2,500 wt.-% of H₂O based on 100 wt.-% of Si, calculated as the element, contained in the mixture prepared in (i) and ground in (ii), preferably in the mixture prepared in (i) and heated in (iii), wherein preferably the mixture prepared in (i) and ground in (ii), preferably the mixture prepared in (i) and heated in (iii), contains from 10 to 2,000 wt.-%, more preferably from 15 to 1,500 wt.-%, more preferably from 20 to 1,000 wt.-%, more preferably from 25 to 700 wt.-%, more preferably from 30 to 500 wt.-%, more preferably from 35 to 350 wt.-%, more preferably from 40 to 250 wt.-%, more preferably from 60 to 200 wt.-%, more preferably from 80 to 150 wt.-%, and more preferably from 100 to 120 wt.-% of H₂O based on 100 wt.-% of Si, calculated as the element, contained in the mixture prepared in (i) and ground in (ii), preferably in the mixture prepared in (i) and heated in (iii).

According to the present invention, it is preferred that the mixture prepared in (i) further contains one or more structure directing agents, wherein preferably one or more organotemplates are employed as the one or more structure directing agents. According to said preferred embodiments, it is further preferred that the molar ratio SDA : Si of the one or more structure directing agents (SDA) to the one or more sources of SiO₂, calculated as Si, in the mixture prepared in (i) and heated in (iii) ranges from 0.001 to 0.5, more preferably from 0.005 to 0.2, more preferably from 0.01 to 0.12, more preferably from 0.03 to 0.09, and more preferably from 0.05 to 0.07, wherein the one or more structure directing agents do not include structure directing agents optionally contained in seed crystals optionally contained in the mixture prepared in (i).

Yet further, it is preferred according to the particular and preferred embodiments of the present invention wherein the mixture prepared in (i) further contains one or more structure directing agents, that the one or more structure directing agents comprises one or more tetraalkylammonium cation R⁴R⁵R⁶R⁷N⁺-containing compounds, wherein R⁴, R⁵, and R⁶ independently from one another stand for alkyl, and wherein R⁷ stands for adamantyl and/or benzyl, preferably for 1-adamantyl. According to said particularly preferred embodiments, it is preferred that R⁴, R⁵, and R⁶ independently from one another stand for optionally substituted and/or optionally branched (C₁-C₆)alkyl, preferably (C₁-C₅)alkyl, more preferably (C₁-C₄)alkyl, more preferably (C₁-C₃)alkyl, and more preferably for optionally substituted methyl or ethyl, wherein more preferably R⁴ , R⁵, and R⁶ independently from one another stand for optionally substituted methyl or ethyl, preferably unsubstituted methyl or ethyl, wherein more preferably R⁴ , R⁵, and R⁶ independently from one another stand for optionally substituted methyl, preferably unsubstituted methyl. Yet further, it is preferred according to said particularly preferred embodiments that R⁷ stands for optionally heterocyclic and/or optionally substituted adamantyl and/or benzyl, more preferably for optionally heterocyclic and/or optionally substituted 1-adamantyl, more preferably for optionally substituted adamantyl and/or benzyl, more preferably for optionally substituted 1-adamantyl, more preferably for unsubstituted adamantyl and/or benzyl, and more preferably for unsubstituted 1-adamantyl. According to particularly preferred embodiments thereof, it is preferred that the one or more tetraalkylammonium cation R⁴R⁵R⁶R⁷N⁺-containing compounds comprise one or more *N,N,N*-tri(C₁-C₄)alkyl-1-adamantylammonium compounds, preferably one or more *N,N,N*-tri(C₁-C₃)alkyl-1-adamantylammonium compounds, more preferably one or more *N,N,N*-tri(C₁-C₂)alkyl-1-adamantylammonium compounds, more preferably one or more *N,N,N*-tri(C₁-C₂)alkyl-1-adamantylammonium and/or one or more *N,N,N*-tri(C₁-C₂)alkyl-1-adamantylammonium compounds, more preferably one or more compounds selected from *N,N,N*-triethyl-1-adamantylammonium, *N,N*-diethyl-*N*-methyl-1-adamantylammonium, *N,N*-dimethyl-*N*-ethyl-1-adamantylammonium, *N,N,N*-trimethyl-1-adamantylammonium compounds, and mixtures of two or more thereof, wherein more preferably the one or more tetraalkylammonium cation R⁴R⁵R⁶R⁷N⁺-containing compounds comprise one or more *N,N,N*-trimethyl-1-adamantylammonium compounds.

Yet further, it is alternatively preferred according to the particular and preferred embodiments of the present invention wherein the mixture prepared in (i) further contains one or more structure directing agents, that the one or more structure directing agents comprises one or more tetraalkylammonium cation R⁴R⁵R⁶R⁷N⁺-containing compounds, wherein R⁴, R⁵, and R⁶ independently from one another stand for alkyl, and wherein R⁷ stands for cycloalkyl. According to said particularly preferred embodiments, it is preferred that R⁴ and R⁵ independently from one another stand for optionally substituted and/or optionally branched (C₁-C₆)alkyl, more preferably (C₁-C₅)alkyl, more preferably (C₁-C₄)alkyl, more preferably (C₁-C₃)alkyl, and more preferably for optionally substituted methyl or ethyl, wherein more preferably R⁴ and R⁵ independently from one another stand for optionally substituted methyl or ethyl, preferably unsubstituted methyl or ethyl, wherein more preferably R⁴ and R⁵ independently from one another stand for optionally substituted methyl, preferably unsubstituted methyl. Furthermore, it is preferred according to said particularly preferred embodiments that R⁶ stands for optionally substituted and/or optionally branched (C₁-C₆)alkyl, more preferably (C₁-C₅)alkyl, more preferably (C₁-C₄)alkyl, more preferably (C₁-C₃)alkyl, and more preferably for optionally substituted methyl or ethyl, wherein more preferably R⁶ stands for optionally substituted ethyl, preferably unsubstituted ethyl. Yet further, it is preferred according to said particularly preferred embodiments that R⁷ stands for optionally heterocyclic and/or optionally substituted 5- to 8-membered cycloalkyl, more preferably for 5- to 7-membered cycloalkyl, more preferably for 5- or 6-membered cycloalkyl, wherein more preferably R⁷ stands for optionally heterocyclic and/or optionally substituted 6-membered cycloalkyl, preferably optionally substituted cyclohexyl, and more preferably unsubstituted cyclohexyl. According to particularly preferred embodiments thereof, it is preferred that the one or more tetraalkylammonium cation R⁴R⁵R⁶R⁷N⁺-containing compounds comprise one or more *N,N,N-*tri(C₁-C₄)alkyl-(C₅-C₇)cycloalkylammonium compounds, preferably one or more *N,N,N*-tri(C₁-C₃)alkyl-(C₅-C₆)cycloalkylammonium compounds, more preferably one or more *N,N,N*-tri(C₁-C₂)alkyl-(C₅-C₆)cycloalkylammonium compounds, more preferably one or more *N,N,N*-tri(C₁-C₂)alkyl-cyclopentylammonium and/or one or more *N,N,N*-tri(C₁-C₂)alkyl-cyclohexylammonium compounds, more preferably one or more compounds selected from *N,N,N*-triethylcyclohexylammonium, *N,N*-diethyl-*N*-methyl-cyclohexylammonium, *N,N*-dimethyl-*N*-ethylcyclohexylammonium, *N,N,N*-trimethyl-cyclohexylammonium compounds, and mixtures of two or more thereof, wherein more preferably the one or more tetraalkylammonium cation R⁴R⁵R⁶R⁷N⁺-containing compounds comprise one or more *N,N*-dimethyl-*N*-ethylcyclohexylammonium and/or *N,N,N*-trimethyl-cyclohexylammonium compounds, more preferably one or more *N,N,N*-trimethyl-cyclohexylammonium compounds.

According to particular and preferred embodiments of the present invention wherein the one or more structure directing agents comprises one or more tetraalkylammonium cation R⁴R⁵R⁶R⁷N⁺-containing compounds, it is preferred that the one or more tetraalkylammonium cation R⁴R⁵R⁶R⁷N⁺-containing compounds are salts, more preferably one or more salts selected from the group consisting of halides, sulfate, nitrate, phosphate, acetate, and mixtures of two or more thereof, more preferably from the group consisting of bromide, chloride, hydroxide, sulfate, and mixtures of two or more thereof, wherein more preferably the one or more tetraalkylammonium cation R⁴R⁵R⁶R⁷N⁺-containing compounds are tetraalkylammonium hydroxides and/or bromides, and more preferably tetraalkylammonium hydroxides.

According to the present invention, it is preferred that heating in (iii) is performed at a temperature in the range of from 80 to 300 °C, more preferably preferably of from 100 to 280 °C, more preferably of from 120 to 250 °C, more preferably of from 140 to 220 °C, more preferably of from 160 to 200 °C, more preferably of from 170 to 190 °C.

Furthermore, it is preferred according to the present invention that in (iii) the mixture obtained in (ii) is heated for a period in the range of from 0.2 to 96 h, more preferably of from 0.4 to 48 h, more preferably of from 0.6 to 36 h, more preferably of from 0.8 to 24 h, more preferably of from 1 to 18 h, more preferably of from 1.5 to 12 h, more preferably of from 2 to 9 h, more preferably of from 3 to 8 h, more preferably of from 4 to 7 h, and more preferably of from 5 to 6 h. yet further, it is preferred according to the present invention that in (iii) the mixture is heated under autogenous pressure, wherein more preferably heating in (ii) is performed in a pressure tight vessel, preferably in an autoclave.

According to the present invention, it is preferred that the zeolitic material obtained in (iii) has a framework structure type selected from the group consisting of AEI, AFX, ANA, BEA, BEC, CAN, CHA, CDO, EMT, ERI, EUO, FAU, FER, GME, HEU, ITH, ITW, KFI, LEV, MEI, MEL, MFI, MOR, MTN, MWW, OFF, RRO, RTH, SAV, SFW, SZR, and TON, including mixed structures of two or more thereof, more preferably from the group consisting of CAN, AEI, EMT, SAV, SZR, KFI, ERI, OFF, RTH, GME, AFX, SFW, BEA, CHA, FAU, FER, HEU, LEV, MEI, MEL, MFI, MOR, and MWW, including mixed structures of two or more thereof, more preferably from the group consisting of AEI, BEA, CHA, FAU, FER, GME, LEV, MFI, MOR, and MWW, including mixed structures of two or more thereof, more preferably from the group consisting of AEI, BEA, CHA, GME, MFI, MOR, and MWW, including mixed structures of two or more thereof, and more preferably from the group consisting of AEI, BEA, CHA, MFI, MOR, and MWW, including mixed structures of two or more thereof, more preferably from the group consisting of AEI, CHA, and MWW, including mixed structures of two or more thereof, wherein more preferably the zeolitic material obtained in (iii) has an AEI- and/or CHA-type framework structure, preferably a CHA-type framework structure.

According to the present invention, it is preferred that the one or more sources for SiO₂ provided in (i) further comprises one or more compounds selected from the group consisting of silicas, silicates, silicic acid and combinations of two or more thereof, more preferably selected from the group consisting of silicas, alkali metal silicates, silicic acid, and combinations of two or more thereof, more preferably selected from the group consisting of fumed silica, colloidal silica, reactive amorphous solid silica, silica gel, pyrogenic silica, lithium silicates, sodium silicates, potassium silicates, silicic acid, and combinations of two or more thereof, more preferably selected from the group consisting of fumed silica, colloidal silica, silica gel, and combinations of two or more thereof, wherein more preferably the one or more sources for SiO₂ further comprises colloidal silica. According to the present invention it is particularly preferred that the one or more sources of SiO₂ consist of one or more cyclic compounds according to formula (I) wherein M is Si. In particular, and independently of said particularly preferred embodiment, it is preferred according to the present invention that the mixture prepared in (i) and heated in (iii) does not contain any silicas or silicates, and more preferably does not contain any silicas, silicates, or any silicic acid.

According to the present invention, it is preferred that X is selected from the group consisting of Al, B, In, Ga, and combinations of two or more thereof, X preferably being Al and/or B, preferably Al.

According to the present invention, it is preferred that the one or more sources for X₂O₃ are one or more solid sources for X₂O₃, wherein more preferably the one or more sources for X₂O₃ comprises one or more compounds selected from the group consisting of aluminum sulfates, sodium aluminates, aluminum alkoxides, and boehmite, wherein preferably the one or more sources for X₂O₃ comprises Al₂(SO₄)₃ and/or aluminum isopropoxide, preferably Al₂(SO₄)₃, wherein more preferably the one or more sources for X₂O₃ is Al₂(SO₄)₃ and/or aluminum isopropoxide, preferably Al₂(SO₄)₃.

According to the present invention, it is preferred that the molar ratio Si : X of the one or more sources of SiO₂, calculated as Si, to the one or more sources for X₂O₃, calculated as X, in the mixture prepared in (i) is in the range of from 1 to 500, more preferably of from 2 to 250, more preferably of from 3 to 150, more preferably of from 5 to 90, more preferably of from 10 to 60, more preferably of from 15 to 50, more preferably of from 20 to 45, more preferably of from 25 to 40, and more preferably of from 30 to 35.

According to the present invention, it is preferred that the mixture prepared in (i) comprises one or more alkali metals AM, wherein the molar ratio AM : Si of the one or more alkali metals AM to the one or more sources of SiO₂, calculated as Si, ranges from 0.001 to 3, preferably of from 0.005 to 1.5, more preferably of from 0.01 to 1, more preferably of from 0.05 to 0.6, more preferably of from 0.1 to 0.4, more preferably of from 0.15 to 0.3, and more preferably of from 0.2 to 0.25. According to said preferred embodiments, it is further preferred that the one or more alkali metals AM comprise one or more alkali metals selected from the group consisting of Li, Na, K, Rb, Cs, and combinations of two or more thereof, more preferably from the group consisting of Li, Na, Rb and combinations of two or more thereof, wherein more preferably the one or more alkali metals AM are Li and/or Na, more preferably Na, wherein more preferably the one or more alkali metals AM is sodium. According to said particular and preferred embodiments, it is particularly preferred that sodium is comprised in the mixture prepared in (i) in a compound selected from the group consisting of sodium hydroxide and sodium aluminates, wherein more preferably sodium is comprised in the mixture prepared in (i) as NaOH and/or NaAlO₂, preferably as NaOH.

According to the present invention, it is particularly preferred that the zeolitic material obtained in (iii) has a CHA-type framework structure, wherein preferably the zeolitic material having a CHA-type framework structure is selected from the group consisting of Willhendersonite, ZYT-6, SAPO-47, Na-chabazite, chabazite, LZ-218, Linde D, Linde R, SAPO-34, ZK-14, K-chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof,
more preferably from the group consisting of ZYT-6, SAPO-47, Na-chabazite, chabazite, LZ-218, Linde D, Linde R, SAPO-34, ZK-14, K-chabazite, Phi, DAF-5, UiO-21, SSZ-13, and SSZ-62, including mixtures of two or more thereof, more preferably from the group consisting of chabazite, Linde D, Linde R, SAPO-34, SSZ-13, and SSZ-62, including mixtures of two or more thereof, more preferably from the group consisting of chabazite, SSZ-13, and SSZ-62, including mixtures of two or three thereof, wherein more preferably the zeolitic material obtained in (iii) comprises chabazite and/or SSZ-13, preferably chabazite, and wherein more preferably the zeolitic material obtained in (iii) is chabazite and/or SSZ-13, preferably chabazite.

According to the present invention, it is preferred that the process further comprises (iv) calcining the zeolitic material obtained in (iii).

According to said particular and preferred embodiments further comprising a calcination step (iv), it is preferred that the calcination is performed at a temperature in the range of from 300 to 900 °C, more preferably of from 400 to 700 °C, more preferably of from 450 to 650 °C, and more preferably of from 500 to 600 °C. Furthermore, and independently thereof, it is preferred that the calcination is performed for a duration in the range of from 0.5 to 24 h, preferably in the range of from 2 to 12 h, more preferably in the range of from 4 to 8 h.
according to the present invention it is further preferred that after (iii) and prior to (iv) the process further comprises
(a) isolating the zeolitic material obtained in (iii), preferably by filtration and/or centrifugation, more preferably by centrifugation,
(b) optionally washing the zeolitic material obtained in (a), preferably with distilled water,
(c) optionally drying the zeolitic material obtained in (a) or (b).

Furthermore, it is preferred according to the present invention that the process further comprises
(v) subjecting the zeolitic material obtained in (a), (b), (c), or (iv) to one or more ion exchange procedures with H⁺ and/or NH₄⁺, preferably with NH₄⁺.

Yet further, it is preferred according to the present invention that the process further comprises (vi) subjecting the zeolitic material obtained in (a), (b), (c), (iv), or (v) to one or more ion exchange procedures with one or more cations and/or cationic elements selected from the group consisting of Sr, Zr, Cr, Mg, Mo, Fe, Co, Ni, Cu, Zn, Ru, Rh, Pd, Ag, Os, Ir, Pt, Au, La, Ce, Pr, Nd, Sm, Eu, Gd, Tb, Dy, Ho, Er, Tm, Yb, Lu, Y, Sc, and mixtures of two or more thereof, more preferably from the group consisting of Sr, Zr, Cr, Mg, Mo, Fe, Co, Ni, Cu, Zn, Ru, Rh, Pd, Ag, Os, Ir, Pt, Au, and mixtures of two or more thereof, more preferably from the group consisting of Sr, Cr, Mo, Fe, Co, Ni, Cu, Zn, Ag, and mixtures of two or more thereof, more preferably from the group consisting of Cr, Mg, Mo, Fe, Ni, Cu, Zn, Ag, and mixtures of two or more thereof, more preferably from the group consisting of Mg, Mo, Fe, Ni, Cu, Zn, Ag, and mixtures of two or more thereof, wherein more preferably the one or more cation and/or cationic elements comprise Cu and/or Fe, preferably Cu, wherein even more preferably the one or more cation and/or cationic elements consist of Cu and/or Fe, preferably of Cu.

According to the present invention, it is preferred that grinding and/or mixing in (ii) is carried out for a duration in the range of from 0.01 to 120 min, more preferably of from 0.05 to 60 min, more preferably of from 0.1 to 30 min, more preferably of from 0.3 to 10 min, more preferably of from 0.5 to 5 min.

furthermore, it is preferred according to the present invention that the mixture prepared in (i) and crystallized in (iii) further comprises seed crystals, wherein the amount of the seed crystals contained in the mixture prepared in (i) and heated in (iii) preferably ranges from 1 to 50 wt.-% based on 100 wt.-% of the one or more sources of SiO₂, calculated as Si, more preferably from 3 to 40 wt.-%, more preferably from 5 to 35 wt.-%, more preferably from 8 to 30 wt.-%, more preferably from 10 to 25 wt.-%, and more preferably from 15 to 20 wt.-%. According to said particular and preferred embodiments, it is preferred that the seed crystals contained in the mixture prepared in (i) and heated in (iii) comprise one or more zeolitic materials, wherein the one or more zeolitic materials preferably have a framework structure type selected from the group consisting of AEI, BEA, BEC, CHA, EUO, FAU, FER, HEU, ITH, ITW, LEV, MEL, MFI, MOR, MTN, MWW, and TON, including mixed structures of two or more thereof, more preferably from the group consisting of AEI, BEA, CHA, FAU, FER, MFI, MOR, and MWW, including mixed structures of two or more thereof, more preferably from the group consisting of AEI, BEA, CHA, MFI, MOR, and MWW, including mixed structures of two or more thereof, wherein more preferably the one or more zeolitic materials have an AEI- and/or CHA-type framework structure, preferably a CHA-type framework structure. In particular, it is preferred that the one or more zeolitic materials having a CHA-type framework structure comprised in the seed crystals is selected from the group consisting of Willhendersonite, ZYT-6, SAPO-47, Na-chabazite, chabazite, LZ-218, Linde D, Linde R, SAPO-34, ZK-14, K-chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof, more preferably from the group consisting of ZYT-6, SAPO-47, Na-chabazite, chabazite, LZ-218, Linde D, Linde R, SAPO-34, ZK-14, K-chabazite, Phi, DAF-5, UiO-21, SSZ-13, and SSZ-62, including mixtures of two or more thereof, more preferably from the group consisting of chabazite, Linde D, Linde R, SAPO-34, SSZ-13, and SSZ-62, including mixtures of two or more thereof, more preferably from the group consisting of chabazite, SSZ-13, and SSZ-62, including mixtures of two or three thereof, wherein more preferably the one or more zeolitic materials having a CHA-type framework structure comprised in the seed crystals is chabazite and/or SSZ-13, preferably chabazite.

According to said particular and preferred embodiments, it is further preferred that the seed crystals preferably contained in the mixture prepared in (i) and heated in (iii) comprise one or more zeolitic materials having the framework structure of the zeolitic material comprising SiO₂ and X₂O₃ in its framework structure obtained according to the process of any of embodiments (1) to (51), wherein preferably the one or more zeolitic materials of the seed crystals is obtainable and/or obtained according to the inventive process as described in any of the particular and preferred embodiments described in the present description.

The present invention further relates to a zeolitic material comprising SiO₂ and X₂O₃ in its framework structure obtainable and/or obtained according to the process as described in any of the particular and preferred embodiments described in the present description, wherein X stands for a trivalent element. According to the present invention, it is preferred that X is selected from the group consisting of Al, B, In, Ga, and combinations of two or more thereof, X more preferably being Al and/or B, preferably Al.

According to the present invention, it is preferred that the inventive zeolitic material has a CHA-type framework structure, wherein more preferably the zeolitic material is selected from the group consisting of Willhendersonite, ZYT-6, SAPO-47, Na-chabazite, chabazite, LZ-218, Linde D, Linde R, SAPO-34, ZK-14, K-chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof, more preferably from the group consisting of ZYT-6, SAPO-47, Na-chabazite, chabazite, LZ-218, Linde D, Linde R, SAPO-34, ZK-14, K-chabazite, Phi, DAF-5, UiO-21, SSZ-13, and SSZ-62, including mixtures of two or more thereof, more preferably from the group consisting of chabazite, Linde D, Linde R, SAPO-34, SSZ-13, and SSZ-62, including mixtures of two or more thereof, more preferably from the group consisting of chabazite, SSZ-13, and SSZ-62, including mixtures of two or three thereof, wherein more preferably the zeolitic material comprises chabazite and/or SSZ-13, preferably chabazite, and wherein more preferably the zeolitic material is chabazite and/or SSZ-13, preferably chabazite.

The present invention further relates to the use of the zeolitic material according to any of the particular and preferred embodiments of the inventive zeolitic material as described in the present description as a molecular sieve, as an adsorbent, for ion-exchange, as a catalyst or a precursor thereof, and/or as a catalyst support or a precursor thereof, more preferably as a catalyst or a precursor thereof and/or as a catalyst support or a precursor thereof, more preferably as a catalyst or a precursor thereof, more preferably as a catalyst for the selective catalytic reduction (SCR) of nitrogen oxides NOₓ; for the storage and/or adsorption of CO₂; for the oxidation of NH₃, in particular for the oxidation of NH₃ slip in diesel systems; for the decomposition of N₂O; as an additive in fluid catalytic cracking (FCC) processes; and/or as a catalyst in organic conversion reactions, preferably in the conversion of alcohols to olefins, and more preferably in methanol to olefin (MTO) catalysis; more preferably for the selective catalytic reduction (SCR) of nitrogen oxides NOₓ, and more preferably for the selective catalytic reduction (SCR) of nitrogen oxides NOₓ in exhaust gas from a combustion engine, preferably from a diesel engine or from a lean burn gasoline engine.

The present invention is further illustrated by the following set of embodiments and combinations of embodiments resulting from the dependencies and back-references as indicated. In particular, it is noted that in each instance where a range of embodiments is mentioned, for example in the context of a term such as "A ... concretizing any one of embodiments (1) to (4)", every embodiment in this range is meant to be explicitly disclosed for the skilled person, i.e. the wording of this term is to be understood by the skilled person as being synonymous to "A ... concretizing any one of embodiments (1), (2), (3), and (4)". Further, it is explicitly noted that the following set of embodiments is not the set of claims determining the extent of protection, but represents a suitably structured part of the description directed to general and preferred aspects of the present invention.

According to an embodiment (1), the present invention relates to a process for the preparation of a zeolitic material comprising SiO₂ and X₂O₃ in its framework structure, wherein Y stands for a tetravalent element and X stands for a trivalent element, wherein said process comprises:
(i) preparing a mixture comprising one or more sources of SiO₂, one or more sources of X₂O₃, and H₂O, wherein the one or more sources of SiO₂ comprises one or more cyclic compounds according to formula (I):

   [-(MR'R")-O]ₙ (I)

   wherein M stands for one or more elements selected from the group consisting of Si, Al, and Ti, including combinations of two or three thereof,
   wherein n is an integer comprised in the range of from 3 to 12, and
   wherein independently from one another, R' and R" stand for H, OMc, alkyl, alkoxy, or siloxy, wherein Mc stands for a cationic moiety, preferably with a single positive charge; and
(ii) grinding and/or mixing the mixture prepared in (i);
(iii) heating the mixture obtained in (ii) for crystallizing a zeolitic material comprising SiO₂ and X₂O₃ in its framework structure from the mixture.

A preferred embodiment (2) concretizing embodiment (1), wherein M stands for Al and/or Si, wherein preferably M is Si and wherein in (i) the one or more cyclic compounds according to (I) which are contained in the one or more sources of SiO₂ are one or more cyclic oligosiloxane compounds.

A preferred embodiment (3) concretizing embodiment (1) or (2), wherein n is an integer comprised in the range of from 3 to 10, preferably in the range of from 3 to 8, wherein more preferably n is 3, 4, 5, or 6, more preferably 3, 4, or 6, more preferably 3 or 4, and more preferably 4. A preferred embodiment (4) concretizing any one of embodiments (1) to (3), wherein Mc stands for one or more cationic moieties having a single and/or a double positive charge, preferably for one or more cationic moieties having a single positive charge.

A preferred embodiment (5) concretizing embodiment (4), wherein Mc stands for one or more cationic moieties selected from the group consisting of alkali metal cations, alkaline earth metal cations, and ammonium, preferably from the group consisting of alkali metal cations and ammonium, more preferably from the group consisting of Li⁺, Na⁺, K⁺, and ammonium, more preferably from the group consisting of Na⁺, K⁺, and ammonium, wherein more preferably Mc stands for Na⁺ and/or ammonium.

A preferred embodiment (6) concretizing any one of embodiments (1) to (5), wherein alkyl stands for C1-C6 alkyl, preferably for C1-C5 alkyl, more preferably for C1-C4 alkyl, more preferably for C1-C3 alkyl, more preferably for C1-C2 alkyl, wherein more preferably alkyl stands for ethyl or methyl, preferably for methyl.

A preferred embodiment (7) concretizing any one of embodiments (1) to (6), wherein alkoxy stands for -OR, wherein R stands for a C1-C6 alkyl group, more preferably for a C1-C5 alkyl group, more preferably for a C1-C4 alkyl group, more preferably for a C1-C3 alkyl group, more preferably for a C1-C2 alkyl group, wherein more preferably R stands for ethyl or methyl, preferably from methyl.

A preferred embodiment (8) concretizing any one of embodiments (1) to (7), wherein siloxy stands for -OSiR¹R²R³, wherein independently from one another, R¹, R², and R³ is H or an alkyl group, preferably H or a C1-C6 alkyl group, more preferably H or a C1-C5 alkyl group, more preferably H or a C1-C4 alkyl group, more preferably H or a C1-C3 alkyl group, more preferably H or a C1-C2 alkyl group, wherein more preferably and independently from one another, R¹, R², and R³ stand for H, ethyl, or methyl, wherein more preferably R¹, R², and R³ stand for ethyl or methyl, preferably from methyl.

A preferred embodiment (9) concretizing any one of embodiments (6) to (8), wherein the alkyl group is substituted with one or more functional groups, wherein preferably the one or more functional groups are selected from the group consisting of hydroxyl, halides, amines, and combinations of two or more thereof, more preferably from the group consisting of-OH, -F, -CI, -Br, - NH₂, and combinations of two or more thereof, and more preferably from the group consisting of -OH, -F, -CI, -NH₂, and combinations of two or more thereof.

A preferred embodiment (10) concretizing any one of embodiments (1) to (9), wherein independently from one another, R' and R" stand for H or siloxy, wherein preferably both R' and R" stand for siloxy.

A preferred embodiment (11) concretizing any one of embodiments (1) to (10), wherein the one or more cyclic compounds according to formula (I) comprise octakis(trimethylsiloxy)cyclotetrasiloxane, wherein preferably the cyclic compound is octakis(trimethylsiloxy)cyclotetrasiloxane.

A preferred embodiment (12) concretizing any one of embodiments (1) to (11), wherein independently from one another, R' and R" stand for H or alkyl, wherein preferably R' stands for H and R" stands for alkyl, and wherein more preferably R' stands for H and R" stands for methyl. A preferred embodiment (13) concretizing any one of embodiments (1) to (12), wherein independently from one another, R' and R" stand for alkyl, wherein preferably R' and R" stand for methyl.

A preferred embodiment (14) concretizing any one of embodiments (1) to (13), wherein the mixture prepared in (i) and ground in (ii), preferably the mixture prepared in (i) and heated in (iii), contains from 5 to 2,500 wt.-% of H₂O based on 100 wt.-% of Si, calculated as the element, contained in the mixture prepared in (i) and ground in (ii), preferably in the mixture prepared in (i) and heated in (iii), wherein preferably the mixture prepared in (i) and ground in (ii), preferably the mixture prepared in (i) and heated in (iii), contains from 10 to 2,000 wt.-%, more preferably from 15 to 1,500 wt.-%, more preferably from 20 to 1,000 wt.-%, more preferably from 25 to 700 wt.-%, more preferably from 30 to 500 wt.-%, more preferably from 35 to 350 wt.-%, more preferably from 40 to 250 wt.-%, more preferably from 60 to 200 wt.-%, more preferably from 80 to 150 wt.-%, and more preferably from 100 to 120 wt.-% of H₂O based on 100 wt.-% of Si, calculated as the element, contained in the mixture prepared in (i) and ground in (ii), preferably in the mixture prepared in (i) and heated in (iii).

A preferred embodiment (15) concretizing any one of embodiments (1) to (14), wherein the mixture prepared in (i) further contains one or more structure directing agents, wherein preferably one or more organotemplates are employed as the one or more structure directing agents.

A preferred embodiment (16) concretizing embodiment (15), wherein the molar ratio SDA : Si of the one or more structure directing agents (SDA) to the one or more sources of SiO₂, calculated as Si, in the mixture prepared in (i) and heated in (iii) ranges from 0.001 to 0.5, preferably from 0.005 to 0.2, more preferably from 0.01 to 0.12, more preferably from 0.03 to 0.09, and more preferably from 0.05 to 0.07, wherein the one or more structure directing agents do not include structure directing agents optionally contained in seed crystals optionally contained in the mixture prepared in (i).

A preferred embodiment (17) concretizing embodiment (15) or (16), wherein the one or more structure directing agents comprises one or more tetraalkylammonium cation R⁴R⁵R⁶R⁷N⁺-containing compounds, wherein R⁴, R⁵, and R⁶ independently from one another stand for alkyl, and wherein R⁷ stands for adamantyl and/or benzyl, preferably for 1-adamantyl.

A preferred embodiment (18) concretizing embodiment (17), wherein R⁴, R⁵, and R⁶ independently from one another stand for optionally substituted and/or optionally branched (C₁-C₆)alkyl, preferably (C₁-C₅)alkyl, more preferably (C₁-C₄)alkyl, more preferably (C₁-C₃)alkyl, and more preferably for optionally substituted methyl or ethyl, wherein more preferably R⁴ , R⁵, and R⁶ independently from one another stand for optionally substituted methyl or ethyl, preferably unsubstituted methyl or ethyl, wherein more preferably R⁴ , R⁵, and R⁶ independently from one another stand for optionally substituted methyl, preferably unsubstituted methyl.

A preferred embodiment (19) concretizing embodiment (17) or (18), wherein R⁷ stands for optionally heterocyclic and/or optionally substituted adamantyl and/or benzyl, preferably for optionally heterocyclic and/or optionally substituted 1-adamantyl, more preferably for optionally substituted adamantyl and/or benzyl, more preferably for optionally substituted 1-adamantyl, more preferably for unsubstituted adamantyl and/or benzyl, and more preferably for unsubstituted 1-adamantyl.

A preferred embodiment (20) concretizing any one of embodiments (17) to (19), wherein the one or more tetraalkylammonium cation R⁴R⁵R⁶R⁷N⁺-containing compounds comprise one or more *N,N,N*-tri(C₁-C₄)alkyl-1-adamantylammonium compounds, preferably one or more *N,N,N-*tri(C₁-C₃)alkyl-1-adamantylammonium compounds, more preferably one or more *N,N,N*-tri(C₁-C₂)alkyl-1-adamantylammonium compounds, more preferably one or more *N,N,N*-tri(C₁-C₂)alkyl-1-adamantylammonium and/or one or more *N,N,N*-tri(C₁-C₂)alkyl-1-adamantylammonium compounds, more preferably one or more compounds selected from *N,N,N*-triethyl-1-adamantylammonium, *N,N-*diethyl-*N*-methyl-1-adamantylammonium, *N,N*-dimethyl-*N*-ethyl-1-adamantylammonium, *N,N,N*-trimethyl-1-adamantylammonium compounds, and mixtures of two or more thereof, wherein more preferably the one or more tetraalkylammonium cation R⁴R⁵R⁶R⁷N⁺-containing compounds comprise one or more *N,N,N*-trimethyl-1-adamantylammonium compounds.

A preferred embodiment (21) concretizing any one of embodiments (17) to (20), wherein the one or more tetraalkylammonium cation R⁴R⁵R⁶R⁷N⁺-containing compounds are salts, preferably one or more salts selected from the group consisting of halides, sulfate, nitrate, phosphate, acetate, and mixtures of two or more thereof, more preferably from the group consisting of bromide, chloride, hydroxide, sulfate, and mixtures of two or more thereof, wherein more preferably the one or more tetraalkylammonium cation R⁴R⁵R⁶R⁷N⁺-containing compounds are tetraalkylammonium hydroxides and/or bromides, and more preferably tetraalkylammonium hydroxides.

A preferred embodiment (22) concretizing any one of embodiments (15) to (16), wherein the one or more structure directing agents comprises one or more tetraalkylammonium cation R⁴R⁵R⁶R⁷N⁺-containing compounds, wherein R⁴, R⁵, and R⁶ independently from one another stand for alkyl, and wherein R⁷ stands for cycloalkyl.

A preferred embodiment (23) concretizing embodiment (22), wherein R⁴ and R⁵ independently from one another stand for optionally substituted and/or optionally branched (C₁-C₆)alkyl, preferably (C₁-C₅)alkyl, more preferably (C₁-C₄)alkyl, more preferably (C₁-C₃)alkyl, and more preferably for optionally substituted methyl or ethyl, wherein more preferably R⁴ and R⁵ independently from one another stand for optionally substituted methyl or ethyl, preferably unsubstituted methyl or ethyl, wherein more preferably R⁴ and R⁵ independently from one another stand for optionally substituted methyl, preferably unsubstituted methyl.

A preferred embodiment (24) concretizing embodiment (22) or (23), wherein R⁶ stands for optionally substituted and/or optionally branched (C₁-C₆)alkyl, preferably (C₁-C₅)alkyl, more preferably (C₁-C₄)alkyl, more preferably (C₁-C₃)alkyl, and more preferably for optionally substituted methyl or ethyl, wherein more preferably R⁶ stands for optionally substituted ethyl, preferably unsubstituted ethyl.

A preferred embodiment (25) concretizing any one of embodiments (22) to (24), wherein R⁷ stands for optionally heterocyclic and/or optionally substituted 5- to 8-membered cycloalkyl, preferably for 5- to 7-membered cycloalkyl, more preferably for 5- or 6-membered cycloalkyl, wherein more preferably R⁷ stands for optionally heterocyclic and/or optionally substituted 6-membered cycloalkyl, preferably optionally substituted cyclohexyl, and more preferably unsubstituted cyclohexyl.

A preferred embodiment (26) concretizing any one of embodiments (22) to (25), wherein the one or more tetraalkylammonium cation R⁴R⁵R⁶R⁷N⁺-containing compounds comprise one or more *N,N,N*-tri(C₁-C₄)alkyl-(C₅-C₇)cycloalkylammonium compounds, preferably one or more *N,N,N*-tri(C₁-C₃)alkyl-(C₅-C₆)cycloalkylammonium compounds, more preferably one or more *N,N,N*-tri(C₁-C₂)alkyl-(C₅-C₆)cycloalkylammonium compounds, more preferably one or more *N,N,N*-tri(C₁-C₂)alkyl-cyclopentylammonium and/or one or more *N,N,N*-tri(C₁-C₂)alkyl-cyclohexylammonium compounds, more preferably one or more compounds selected from *N,N,N*-triethyl-cyclohexylammonium, *N,N*-diethyl-*N*-methyl-cyclohexylammonium, *N,N-*dimethyl-*N*-ethyl-cyclohexylammonium, *N,N,N*-trimethyl-cyclohexylammonium compounds, and mixtures of two or more thereof, wherein more preferably the one or more tetraalkylammonium cation R⁴R⁵R⁶R⁷N⁺-containing compounds comprise one or more *N,N*-dimethyl-*N*-ethyl-cyclohexylammonium and/or *N,N,N*-trimethyl-cyclohexylammonium compounds, more preferably one or more *N,N,N*-trimethyl-cyclohexylammonium compounds.

A preferred embodiment (27) concretizing any one of embodiments (22) to (26), wherein the one or more tetraalkylammonium cation R⁴R⁵R⁶R⁷N⁺-containing compounds are salts, preferably one or more salts selected from the group consisting of halides, sulfate, nitrate, phosphate, acetate, and mixtures of two or more thereof, more preferably from the group consisting of bromide, chloride, hydroxide, sulfate, and mixtures of two or more thereof, wherein more preferably the one or more tetraalkylammonium cation R⁴R⁵R⁶R⁷N⁺-containing compounds are tetraalkylammonium hydroxides and/or bromides, and more preferably tetraalkylammonium hydroxides.

A preferred embodiment (28) concretizing any one of embodiments (1) to (27), wherein heating in (iii) is performed at a temperature in the range of from 80 to 300 °C, preferably of from 100 to 280 °C, more preferably of from 120 to 250 °C, more preferably of from 140 to 220 °C, more preferably of from 160 to 200 °C, more preferably of from 170 to 190 °C.

A preferred embodiment (29) concretizing any one of embodiments (1) to (28), wherein in (iii) the mixture obtained in (ii) is heated for a period in the range of from 0.2 to 96 h, preferably of from 0.4 to 48 h, more preferably of from 0.6 to 36 h, more preferably of from 0.8 to 24 h, more preferably of from 1 to 18 h, more preferably of from 1.5 to 12 h, more preferably of from 2 to 9 h, more preferably of from 3 to 8 h, more preferably of from 4 to 7 h, and more preferably of from 5 to 6 h.

A preferred embodiment (30) concretizing any one of embodiments (1) to (29), wherein in (iii) the mixture is heated under autogenous pressure, wherein preferably heating in (ii) is performed in a pressure tight vessel, preferably in an autoclave.

A preferred embodiment (31) concretizing any one of embodiments (1) to (30), wherein the zeolitic material obtained in (iii) has a framework structure type selected from the group consisting of AEI, AFX, ANA, BEA, BEC, CAN, CHA, CDO, EMT, ERI, EUO, FAU, FER, GME, HEU, ITH, ITW, KFI, LEV, MEI, MEL, MFI, MOR, MTN, MWW, OFF, RRO, RTH, SAV, SFW, SZR, and TON, including mixed structures of two or more thereof, preferably from the group consisting of CAN, AEI, EMT, SAV, SZR, KFI, ERI, OFF, RTH, GME, AFX, SFW, BEA, CHA, FAU, FER, HEU, LEV, MEI, MEL, MFI, MOR, and MWW, including mixed structures of two or more thereof, more preferably from the group consisting of AEI, BEA, CHA, FAU, FER, GME, LEV, MFI, MOR, and MWW, including mixed structures of two or more thereof, more preferably from the group consisting of AEI, BEA, CHA, GME, MFI, MOR, and MWW, including mixed structures of two or more thereof, and more preferably from the group consisting of AEI, BEA, CHA, MFI, MOR, and MWW, including mixed structures of two or more thereof, more preferably from the group consisting of AEI, CHA, and MWW, including mixed structures of two or more thereof, wherein more preferably the zeolitic material obtained in (iii) has an AEI- and/or CHA-type framework structure, preferably a CHA-type framework structure.

A preferred embodiment (32) concretizing any one of embodiments (1) to (31), wherein the one or more sources for SiO₂ further comprises one or more compounds selected from the group consisting of silicas, silicates, silicic acid and combinations of two or more thereof, preferably selected from the group consisting of silicas, alkali metal silicates, silicic acid, and combinations of two or more thereof, more preferably selected from the group consisting of fumed silica, colloidal silica, reactive amorphous solid silica, silica gel, pyrogenic silica, lithium silicates, sodium silicates, potassium silicates, silicic acid, and combinations of two or more thereof, more preferably selected from the group consisting of fumed silica, colloidal silica, silica gel, and combinations of two or more thereof, wherein more preferably the one or more sources for SiO₂ further comprises colloidal silica.

A preferred embodiment (33) concretizing any one of embodiments (1) to (31), wherein the one or more sources of SiO₂ consist of one or more cyclic compounds according to formula (I) wherein M is Si.

A preferred embodiment (34) concretizing any one of embodiments (1) to (31) and (33), wherein the mixture prepared in (i) and heated in (iii) does not contain any silicas or silicates, and preferably does not contain any silicas, silicates, or any silicic acid.

A preferred embodiment (35) concretizing any one of embodiments (1) to (34), wherein X is selected from the group consisting of Al, B, In, Ga, and combinations of two or more thereof, X preferably being Al and/or B, preferably Al.

A preferred embodiment (36) concretizing any one of embodiments (1) to (35), wherein the one or more sources for X₂O₃ are one or more solid sources for X₂O₃, wherein preferably the one or more sources for X₂O₃ comprises one or more compounds selected from the group consisting of aluminum sulfates, sodium aluminates, aluminum alkoxides, and boehmite, wherein preferably the one or more sources for X₂O₃ comprises Al₂(SO₄)₃ and/or aluminum isopropoxide, preferably Al₂(SO₄)₃, wherein more preferably the one or more sources for X₂O₃ is Al₂(SO₄)₃ and/or aluminum isopropoxide, preferably Al₂(SO₄)₃.

A preferred embodiment (37) concretizing any one of embodiments (1) to (36), wherein the molar ratio Si : X of the one or more sources of SiO₂, calculated as Si, to the one or more sources for X₂O₃, calculated as X, in the mixture prepared in (i) is in the range of from 1 to 500, preferably of from 2 to 250, more preferably of from 3 to 150, more preferably of from 5 to 90, more preferably of from 10 to 60, more preferably of from 15 to 50, more preferably of from 20 to 45, more preferably of from 25 to 40, and more preferably of from 30 to 35.

A preferred embodiment (38) concretizing any one of embodiments (1) to (37), wherein the mixture prepared in (i) comprises one or more alkali metals AM, wherein the molar ratio AM : Si of the one or more alkali metals AM to the one or more sources of SiO₂, calculated as Si, ranges from 0.001 to 3, preferably of from 0.005 to 1.5, more preferably of from 0.01 to 1, more preferably of from 0.05 to 0.6, more preferably of from 0.1 to 0.4, more preferably of from 0.15 to 0.3, and more preferably of from 0.2 to 0.25.

A preferred embodiment (39) concretizing embodiment (38), wherein the one or more alkali metals AM comprise one or more alkali metals selected from the group consisting of Li, Na, K, Rb, Cs, and combinations of two or more thereof, more preferably from the group consisting of Li, Na, Rb and combinations of two or more thereof, wherein more preferably the one or more alkali metals AM are Li and/or Na, more preferably Na, wherein more preferably the one or more alkali metals AM is sodium.

A preferred embodiment (40) concretizing embodiment (39), wherein sodium is comprised in the mixture prepared in (i) in a compound selected from the group consisting of sodium hydroxide and sodium aluminates, wherein preferably sodium is comprised in the mixture prepared in (i) as NaOH and/or NaAlO₂, preferably as NaOH.

A preferred embodiment (41) concretizing any one of embodiments (1) to (40), wherein the zeolitic material obtained in (iii) has a CHA-type framework structure, wherein preferably the zeolitic material having a CHA-type framework structure is selected from the group consisting of Willhendersonite, ZYT-6, SAPO-47, Na-chabazite, chabazite, LZ-218, Linde D, Linde R, SAPO-34, ZK-14, K-chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof,
more preferably from the group consisting of ZYT-6, SAPO-47, Na-chabazite, chabazite, LZ-218, Linde D, Linde R, SAPO-34, ZK-14, K-chabazite, Phi, DAF-5, UiO-21, SSZ-13, and SSZ-62, including mixtures of two or more thereof,
more preferably from the group consisting of chabazite, Linde D, Linde R, SAPO-34, SSZ-13, and SSZ-62, including mixtures of two or more thereof,
more preferably from the group consisting of chabazite, SSZ-13, and SSZ-62, including mixtures of two or three thereof,
wherein more preferably the zeolitic material obtained in (iii) comprises chabazite and/or SSZ-13, preferably chabazite, and wherein more preferably the zeolitic material obtained in (iii) is chabazite and/or SSZ-13, preferably chabazite.

A preferred embodiment (42) concretizing any one of embodiments (1) to (41), wherein the process further comprises
(iv) calcining the zeolitic material obtained in (iii).

A preferred embodiment (43) concretizing embodiment (42), wherein the calcination is performed at a temperature in the range of from 300 to 900 °C, preferably of from 400 to 700 °C, more preferably of from 450 to 650 °C, and more preferably of from 500 to 600 °C.

A preferred embodiment (44) concretizing embodiment (42) or (43), wherein the calcination is performed for a duration in the range of from 0.5 to 24 h, preferably in the range of from 2 to 12 h, more preferably in the range of from 4 to 8 h.

A preferred embodiment (45) concretizing any one of embodiments (42) to (44), wherein after (iii) and prior to (iv) the process further comprises
(a) isolating the zeolitic material obtained in (iii), preferably by filtration and/or centrifugation, more preferably by centrifugation,
(b) optionally washing the zeolitic material obtained in (a), preferably with distilled water,
(c) optionally drying the zeolitic material obtained in (a) or (b).

A preferred embodiment (46) concretizing any one of embodiments (42) to (45), wherein the process further comprises
(v) subjecting the zeolitic material obtained in (a), (b), (c), or (iv) to one or more ion exchange procedures with H⁺ and/or NH₄⁺, preferably with NH₄⁺.

A preferred embodiment (47) concretizing any one of embodiments (42) to (46), wherein the process further comprises
(vi) subjecting the zeolitic material obtained in (a), (b), (c), (iv), or (v) to one or more ion exchange procedures with one or more cations and/or cationic elements selected from the group consisting of Sr, Zr, Cr, Mg, Mo, Fe, Co, Ni, Cu, Zn, Ru, Rh, Pd, Ag, Os, Ir, Pt, Au, La, Ce, Pr, Nd, Sm, Eu, Gd, Tb, Dy, Ho, Er, Tm, Yb, Lu, Y, Sc, and mixtures of two or more thereof, more preferably from the group consisting of Sr, Zr, Cr, Mg, Mo, Fe, Co, Ni, Cu, Zn, Ru, Rh, Pd, Ag, Os, Ir, Pt, Au, and mixtures of two or more thereof, more preferably from the group consisting of Sr, Cr, Mo, Fe, Co, Ni, Cu, Zn, Ag, and mixtures of two or more thereof, more preferably from the group consisting of Cr, Mg, Mo, Fe, Ni, Cu, Zn, Ag, and mixtures of two or more thereof, more preferably from the group consisting of Mg, Mo, Fe, Ni, Cu, Zn, Ag, and mixtures of two or more thereof, wherein more preferably the one or more cation and/or cationic elements comprise Cu and/or Fe, preferably Cu, wherein even more preferably the one or more cation and/or cationic elements consist of Cu and/or Fe, preferably of Cu.

A preferred embodiment (48) concretizing any one of embodiments (1) to (47), wherein grinding and/or mixing in (ii) is carried out for a duration in the range of from 0.01 to 120 min, preferably of from 0.05 to 60 min, more preferably of from 0.1 to 30 min, more preferably of from 0.3 to 10 min, more preferably of from 0.5 to 5 min.

A preferred embodiment (49) concretizing any one of embodiments (1) to (48), wherein the mixture prepared in (i) and crystallized in (iii) further comprises seed crystals, wherein the amount of the seed crystals contained in the mixture prepared in (i) and heated in (iii) preferably ranges from 1 to 50 wt.-% based on 100 wt.-% of the one or more sources of SiO₂, calculated as Si, preferably from 3 to 40 wt.-%, more preferably from 5 to 35 wt.-%, more preferably from 8 to 30 wt.-%, more preferably from 10 to 25 wt.-%, and more preferably from 15 to 20 wt.-%.

A preferred embodiment (50) concretizing embodiment (49), wherein the seed crystals contained in the mixture prepared in (i) and heated in (iii) comprise one or more zeolitic materials, wherein the one or more zeolitic materials preferably have a framework structure type selected from the group consisting of AEI, BEA, BEC, CHA, EUO, FAU, FER, HEU, ITH, ITW, LEV, MEL, MFI, MOR, MTN, MWW, and TON, including mixed structures of two or more thereof, preferably from the group consisting of AEI, BEA, CHA, FAU, FER, MFI, MOR, and MWW, including mixed structures of two or more thereof, more preferably from the group consisting of AEI, BEA, CHA, MFI, MOR, and MWW, including mixed structures of two or more thereof, wherein more preferably the one or more zeolitic materials have an AEI- and/or CHA-type framework structure, preferably a CHA-type framework structure.

A preferred embodiment (51) concretizing embodiment (49) or (50), wherein the one or more zeolitic materials having a CHA-type framework structure comprised in the seed crystals is selected from the group consisting of Willhendersonite, ZYT-6, SAPO-47, Na-chabazite, chabazite, LZ-218, Linde D, Linde R, SAPO-34, ZK-14, K-chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof,
preferably from the group consisting of ZYT-6, SAPO-47, Na-chabazite, chabazite, LZ-218, Linde D, Linde R, SAPO-34, ZK-14, K-chabazite, Phi, DAF-5, UiO-21, SSZ-13, and SSZ-62, including mixtures of two or more thereof,
more preferably from the group consisting of chabazite, Linde D, Linde R, SAPO-34, SSZ-13, and SSZ-62, including mixtures of two or more thereof,
more preferably from the group consisting of chabazite, SSZ-13, and SSZ-62, including mixtures of two or three thereof,
wherein more preferably the one or more zeolitic materials having a CHA-type framework structure comprised in the seed crystals is chabazite and/or SSZ-13, preferably chabazite.

A preferred embodiment (52) concretizing any one of embodiments (49) to (51), wherein the seed crystals contained in the mixture prepared in (i) and heated in (iii) comprise one or more zeolitic materials having the framework structure of the zeolitic material comprising SiO₂ and X₂O₃ in its framework structure obtained according to the process of any of embodiments (1) to (51), wherein preferably the one or more zeolitic materials of the seed crystals is obtainable and/or obtained according to the process of any of embodiments (1) to (51).

According to an embodiment (53), the present invention relates to a zeolitic material comprising SiO₂ and X₂O₃ in its framework structure obtainable and/or obtained according to the process of any of embodiments (1) to (52), wherein X stands for a trivalent element.

A preferred embodiment (54) concretizing embodiment (53), wherein X is selected from the group consisting of Al, B, In, Ga, and combinations of two or more thereof, X preferably being Al and/or B, preferably Al.

A preferred embodiment (55) concretizing embodiment (53) or (54), wherein the zeolitic material has a CHA-type framework structure, wherein preferably the zeolitic material is selected from the group consisting of Willhendersonite, ZYT-6, SAPO-47, Na-chabazite, chabazite, LZ-218, Linde D, Linde R, SAPO-34, ZK-14, K-chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof, more preferably from the group consisting of ZYT-6, SAPO-47, Na-chabazite, chabazite, LZ-218, Linde D, Linde R, SAPO-34, ZK-14, K-chabazite, Phi, DAF-5, UiO-21, SSZ-13, and SSZ-62, including mixtures of two or more thereof,
more preferably from the group consisting of chabazite, Linde D, Linde R, SAPO-34, SSZ-13, and SSZ-62, including mixtures of two or more thereof,
more preferably from the group consisting of chabazite, SSZ-13, and SSZ-62, including mixtures of two or three thereof,
wherein more preferably the zeolitic material comprises chabazite and/or SSZ-13, preferably chabazite, and wherein more preferably the zeolitic material is chabazite and/or SSZ-13, preferably chabazite.

According to an embodiment (56), the present invention relates to the use of the zeolitic material according to any of embodiments (53) to (55) as a molecular sieve, as an adsorbent, for ion-exchange, as a catalyst or a precursor thereof, and/or as a catalyst support or a precursor thereof, preferably as a catalyst or a precursor thereof and/or as a catalyst support or a precursor thereof, more preferably as a catalyst or a precursor thereof, more preferably as a catalyst for the selective catalytic reduction (SCR) of nitrogen oxides NOₓ; for the storage and/or adsorption of CO₂; for the oxidation of NH₃, in particular for the oxidation of NH₃ slip in diesel systems; for the decomposition of N₂O; as an additive in fluid catalytic cracking (FCC) processes; and/or as a catalyst in organic conversion reactions, preferably in the conversion of alcohols to olefins, and more preferably in methanol to olefin (MTO) catalysis; more preferably for the selective catalytic reduction (SCR) of nitrogen oxides NOₓ, and more preferably for the selective catalytic reduction (SCR) of nitrogen oxides NOₓ in exhaust gas from a combustion engine, preferably from a diesel engine or from a lean burn gasoline engine.

### DESCRIPTION OF THE FIGURES

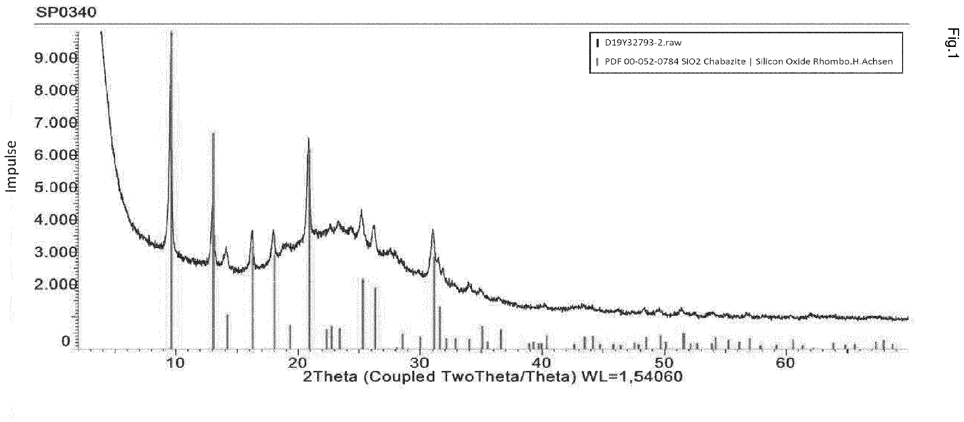

- Figures 1: displays the powder X-ray diffraction pattern of the product obtained in Example 1. In the figure, the diffraction angle in ° 2Theta is plotted along the abscissa and the relative intensity in arbitrary units is shown along the ordinate. Furthermore the line pattern from the diffraction of chabazite is shown as a reference.

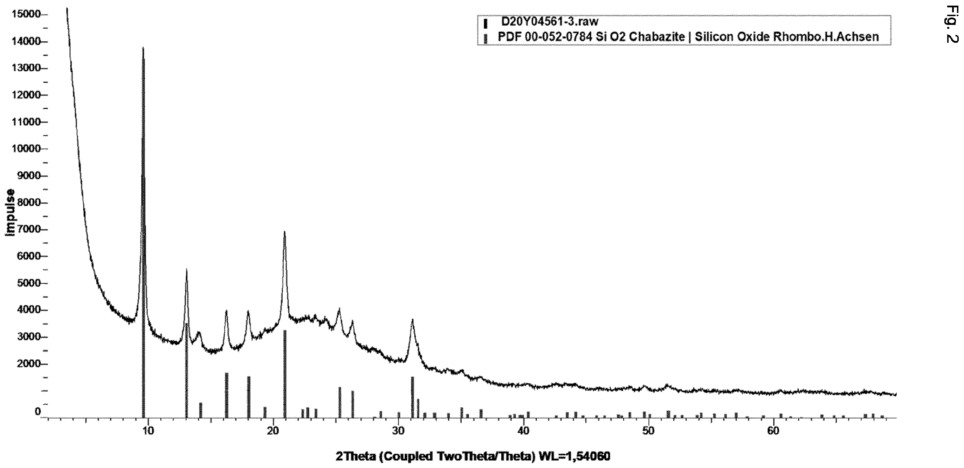

- Figure 2: displays the powder X-ray diffraction pattern of the product obtained in Example 2. In the figure, the diffraction angle in ° 2Theta is plotted along the abscissa and the relative intensity in arbitrary units is shown along the ordinate. Furthermore the line pattern from the diffraction of chabazite is shown as a reference.

### EXPERIMENTAL SECTION

### Reference Example 1: X-ray diffraction analysis

Powder X-ray diffraction (PXRD) data was collected using a diffractometer (D8 Advance Series II, Bruker AXS GmbH) equipped with a LYNXEYE detector operated with a Copper anode X-ray tube running at 40kV and 40mA. The geometry was Bragg-Brentano, and air scattering was reduced using an air scatter shield. The crystallinity was determined using DIFFRAC.EVA software (User Manual for DIFFRAC.EVA, Bruker AXS GmbH, Karlsruhe).

### Example 1: Synthesis of a zeolite having a CHA-type framework structure using a four-membered ring silicate precursor

### Starting materials:

| | |
|---|---|
| octakis (trim ethylsi loxy)cycl otetrasi loxane) | 2.6g |
| sodium hydroxide (powder) | 0.5g |
| aluminum sulfate x 18 H₂O | 0.8g |
| trimethyladamantylammonium hydroxide (50% aqeous solution) (SX-0006-H, SACHEM) | 1.3g |
| CHA Seeds | 0.2g |
| deionized water | 0.1 g |

### Experimental procedure:

Octakis(trimethylsiloxy)cyclotetrasiloxane, NaOH, and aluminum sulfate are added to a porcelain bowl and mixed together with a spatula. The trimethyladamantylammonium hydroxide and deionized water are mixed together and added drop-wise to the solid precursors. The mixture is then grinded to yield a homogeneous mass. In a last step, the seed crystals are added and the mixture is grinded for another 2 min. 4.9 g of the mixture are transferred into an autoclave and sealed. The autoclave is placed into an oven which was preheated to 190°C. Placement of the autoclave into the oven resulted in an oven temperature drop to 178°C. After 50 min 190°C was reached again. The sample was then left to crystallize at 190°C for 4h.

After crystallization, the solid product is washed by centrifugation until the conductivity of the water is below <200µS/cm2. The solid product is dried over night at 120°C in an oven. Afterwards, the powder is calcined (7h ramp to 450°C, hold 2 h; in 30 min to 500°C, hold 2 h; in 30 min to 550°C, hold 2 h).

The powder X-ray diffraction pattern of the resulting product is show in Figure 1, wherein the line pattern of chabazite has been included for comparison. The product displayed a crystallinity of 38%.

### Example 2: Synthesis of a zeolite having a CHA-type framework structure using a four-membered ring silicate precursor

### Starting materials:

| | |
|---|---|
| octakis(trimethylsiloxy)cyclotetrasiloxane) | 5.3g |
| sodium hydroxide (powder) | 0.3g |
| aluminum sulfate x 18 H₂O | 0.5g |
| trimethyladamantylammonium hydroxide (50% aqueous solution) (SX-0006-H, SACHEM) | 0.9g |
| deionized water | 0.1g |

### Experimental procedure:

Octakis(trimethylsiloxy)cyclotetrasiloxane, NaOH and aluminum sulfate are added to a porcellan bowl and mixed together with a spatula. The trimethyladamantylammonium hydroxide and deionized water are mixed together and added drop-wise to the solid precursors. The mixture is then grinded to yield a homogeneous mass. The total mixture is transferred into an autoclave and sealed. The autoclave is placed into an oven which was preheated to 170°C. Placement of the autoclave into the oven resulted in an oven temperature drop to 159°C. After 50 min 170°C was reached again. The sample was then left to crystallize at 170°C for 7h.

After crystallization, the solid product is washed by centrifugation until the conductivity of the water is below <200µS/cm2. The solid product is dried over night at 120°C in an oven. Afterwards, the powder is calcined (ramp 2°C/min to 500°C, hold 6 h). 1.4 g of a light-grey powder is obtained.

The powder X-ray diffraction pattern of the resulting product is show in Figure 2, wherein the line pattern of chabazite has been included for comparison. The product displayed a crystallinity of 40%.

Thus, as may be taken from the results of Examples 1 and 2, it has surprisingly been found that zeolitic materials may be obtained in high purity from simple precursor materials already displaying basic structural elements and in particular elementary ring structures present in the final zeolitic material. In particular, apart from amorphous side product apparent from the X-ray diffraction pattern, the zeolitic materials are obtained in high phase purity according to a simple procedure.

### List of cited prior art

- Marler, B. and Gies, H. in Eur. J. Mineral. 2012, 24, 405-428
- Yang, B. et al. in Angew. Chem. Int. Ed. 2018, 57, 915-9519

## Claims

1. A process for the preparation of a zeolitic material comprising SiO₂ and X₂O₃ in its framework structure, wherein Y stands for a tetravalent element and X stands for a trivalent element, wherein said process comprises:
(i) preparing a mixture comprising one or more sources of SiO₂, one or more sources of X₂O₃, and H₂O, wherein the one or more sources of SiO₂ comprises one or more cyclic compounds according to formula (I):
[-(MR'R")-O]ₙ (I)
wherein M stands for one or more elements selected from the group consisting of Si, Al, and Ti, including combinations of two or three thereof,
wherein n is an integer comprised in the range of from 3 to 12, and
wherein independently from one another, R' and R" stand for H, OMc, alkyl, alkoxy, or siloxy, wherein Mc stands for a cationic moiety; and
(ii) grinding and/or mixing the mixture prepared in (i);
(iii) heating the mixture obtained in (ii) for crystallizing a zeolitic material comprising SiO₂ and X₂O₃ in its framework structure from the mixture.

2. The process of claim 1, wherein M stands for Al and/or Si.

3. The process of claims 1 or 2, wherein siloxy stands for -OSiR¹R²R³, wherein independently from one another, R¹, R², and R³ is H or an alkyl group.

4. The process of any of claims 1 to 3, wherein the one or more cyclic compounds according to formula (I) comprise octakis(trimethylsiloxy)cyclotetrasiloxane.

5. The process of any of claims 1 to 4, wherein the mixture prepared in (i) further contains one or more structure directing agents.

6. The process of claim 5, wherein the one or more structure directing agents comprises one or more tetraalkylammonium cation R⁴R⁵R⁶R⁷N⁺-containing compounds, wherein R⁴, R⁵, and R⁶ independently from one another stand for alkyl, and wherein R⁷ stands for adamantyl and/or benzyl.

7. The process of claim 5, wherein the one or more structure directing agents comprises one or more tetraalkylammonium cation R⁴R⁵R⁶R⁷N⁺-containing compounds, wherein R⁴, R⁵, and R⁶ independently from one another stand for alkyl, and wherein R⁷ stands for cycloalkyl.

8. The process of any of claims 1 to 7, wherein heating in (iii) is performed at a temperature in the range of from 80 to 300 °C.

9. The process of any of claims 1 to 8, wherein in (iii) the mixture is heated under autogenous pressure.

10. The process of any of claims 1 to 9, wherein the zeolitic material obtained in (iii) has a framework structure type selected from the group consisting of AEI, AFX, ANA, BEA, BEC, CAN, CHA, CDO, EMT, ERI, EUO, FAU, FER, GME, HEU, ITH, ITW, KFI, LEV, MEI, MEL, MFI, MOR, MTN, MWW, OFF, RRO, RTH, SAV, SFW, SZR, and TON, including mixed structures of two or more thereof.

11. The process of any of claims 1 to 10, wherein X is selected from the group consisting of Al, B, In, Ga, and combinations of two or more thereof.

12. The process of any of claims 1 to 11, wherein the zeolitic material obtained in (iii) has a CHA-type framework structure.

13. A zeolitic material comprising SiO₂ and X₂O₃ in its framework structure obtainable and/or obtained according to the process of any of claims 1 to 12, wherein X stands for a trivalent element.

14. The zeolitic material of claim 13, wherein the zeolitic material has a CHA-type framework structure.

15. Use of the zeolitic material according to claim 13 or 14 as a molecular sieve, as an adsorbent, for ion-exchange, as a catalyst or a precursor thereof, and/or as a catalyst support or a precursor thereof.
